(19) Europäisches Patentamt
European Patent Office
Office européen des brevets

(11) Publication number: **0 169 334**
**B1**

(12) # EUROPEAN PATENT SPECIFICATION

(45) Date of publication of patent specification: **25.01.89**

(51) Int. Cl.$^4$: **C 08 F 220/34,** C 08 F 220/06

(21) Application number: **85106347.9**

(22) Date of filing: **23.05.85**

(54) **Cyanoethylacrylate/acrylic acid copolymer.**

(30) Priority: **30.05.84 US 615191**

(43) Date of publication of application:
**29.01.86 Bulletin 86/05**

(45) Publication of the grant of the patent:
**25.01.89 Bulletin 89/04**

(84) Designated Contracting States:
**DE FR GB IT NL SE**

(56) References cited:
**DE-A-1 520 124**

(73) Proprietor: **PPG INDUSTRIES, INC.**
**One PPG Place**
**Pittsburgh Pennsylvania 15272 (US)**

(72) Inventor: **Rukavina, Thomas George**
**2518 Feroce Drive**
**Lower Burrell, Pa. 15068 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

**EP 0 169 334 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Background

The present invention relates generally to the art of organic polymers, and more particularly to the art of acrylate copolymers.

U.S. Patent No. 4,154,914 to Kuraya teaches the copolymerization of an arcylic ester or esters with a malonic acid derivative having an active methylene group to produce an acrylic rubber.

### Summary

The present invention involves the synthesis of a novel low molecular weight cyanoethylacrylate/acrylic acid copolymer which is particularly useful as a primer to bond metal-containing thin films to organic polymer substrates. The invention further comprises a terpolymer formed from cyanoethylacrylate, acrylic acid and hydroxyethylacrylate. The terpolymer is especially effective for bonding conductive metal oxide films to acrylic substrates.

### Description of the Preferred Embodiments

The preferred low molecular weight cyanoethylacrylate/acrylic acid copolymer of the present invention is synthesized by a free radical initiated polymerization reaction of cyanoethylacrylate and acrylic acid. A preferred free radical initiator is 2,2'-azobis(isobutyronitrile). The polymerization is preferably carried out with cyanoethylacrylate and acrylic acid in solution. Cyclohexanone is a preferred solvent, and a concentration of about 25 percent monomer solids is particularly preferred.

The polymerization reaction is preferably carried out by dissolving cyanoethylacrylate and acrylic acid at about 25 percent total solids in cyclohexanone. The ratio of monomers is preferably about 2:1 acrylic acid to cyanoethylacrylate. A very small amount, typically less than 0.1 percent, of free radical initiator is also dissolved in the solvent. As the reaction solution is heated to about 90°C, 2,2'-azobis(isobutyronitrile) decomposes to form two free radicals with the evolution of nitrogen. The reaction solution is preferably held at a temperature of about 90 to 100°C for about 24 hours to form a linear oligomer reaction product of cyanoethylacrylate/acrylic acid. The polymerization reaction proceeds as follows:

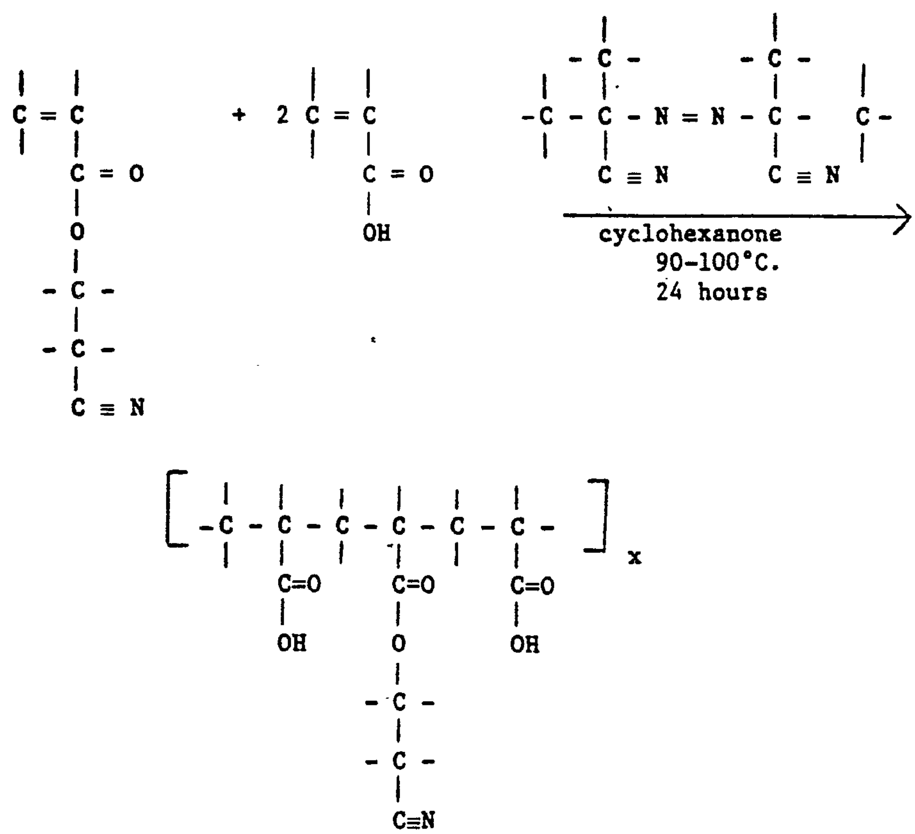


wherein x is ⩾1. The cyanoethylacrylate/hydroxyethylacrylate/acrylic acid terpolymer of the present invention is formed by a similar free radical initiated polymerization reaction, preferably using cyanoethylacrylate, hydroxyethylacrylate and acrylic acid monomers in a molar ratio of about 3:5:2, respectively. A

composition comprising the polymerization reaction products of cyanoethylacrylate, hydroxyethylacrylate and acrylic acid comprises the structural formula

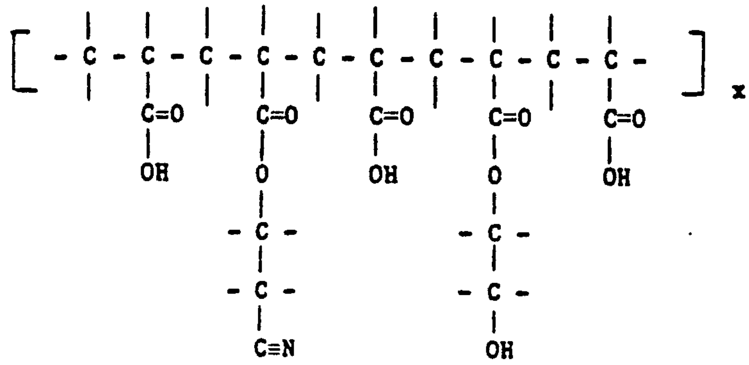

wherein x is ⩾1.

A method for synthesizing a copolymer of acrylic acid and functional acrylate comprises the steps of:

a. dissolving in a compatible solvent acrylic acid, cyanoethylacrylate and hydroxyethylacrylate monomers;

b. adding a free radical initiator;

c. heating the solution to a sufficient temperature for a sufficient time to polymerize the monomers.

For use as primers in accordance with the present invention, the surface polarity of the linear copolymers and terpolymers described above is preferably such that the contact angle of water on the polymer surface is greater than 28° and less than 60°. The linear polymers are preferably crosslinked for use as primers in accordance with the present invention. Crosslinking improves the peel strength adhesion, dimensional stability and weather resistance of the polymers, and may be accomplished with crosslinking agents such as diepoxides and triisocyanates. The composition wherein the linear polymer is further reacted with a crosslinking agent to form a crosslinked polymer comprising the structural formula

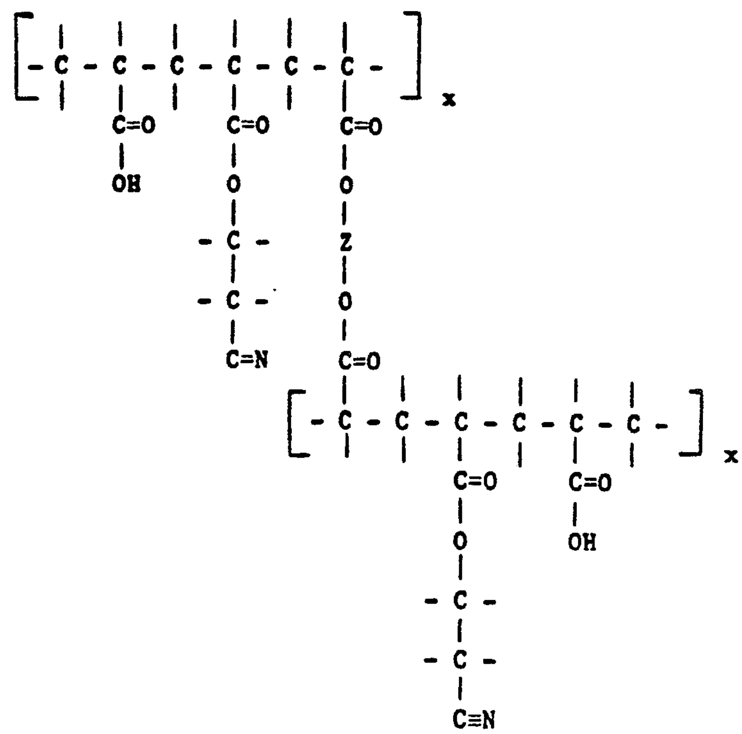

wherein Z represents the crosslinking agent.

A preferred crosslinking agent is 2-(3,4-epoxycyclohexyl-5,5-spiro-3,4-epoxy)cyclohexane-metadioxane, which reacts with carboxylic acid groups without a catalyst at temperatures above 150°C, and at lower temperatures in the presence of a Lewis acid. Preferably, the crosslinking is carried out at a

temperature no higher than 100°C using a catalyst; dibutyltin dilaurate is preferred. The crosslinking reaction is illustrated below.

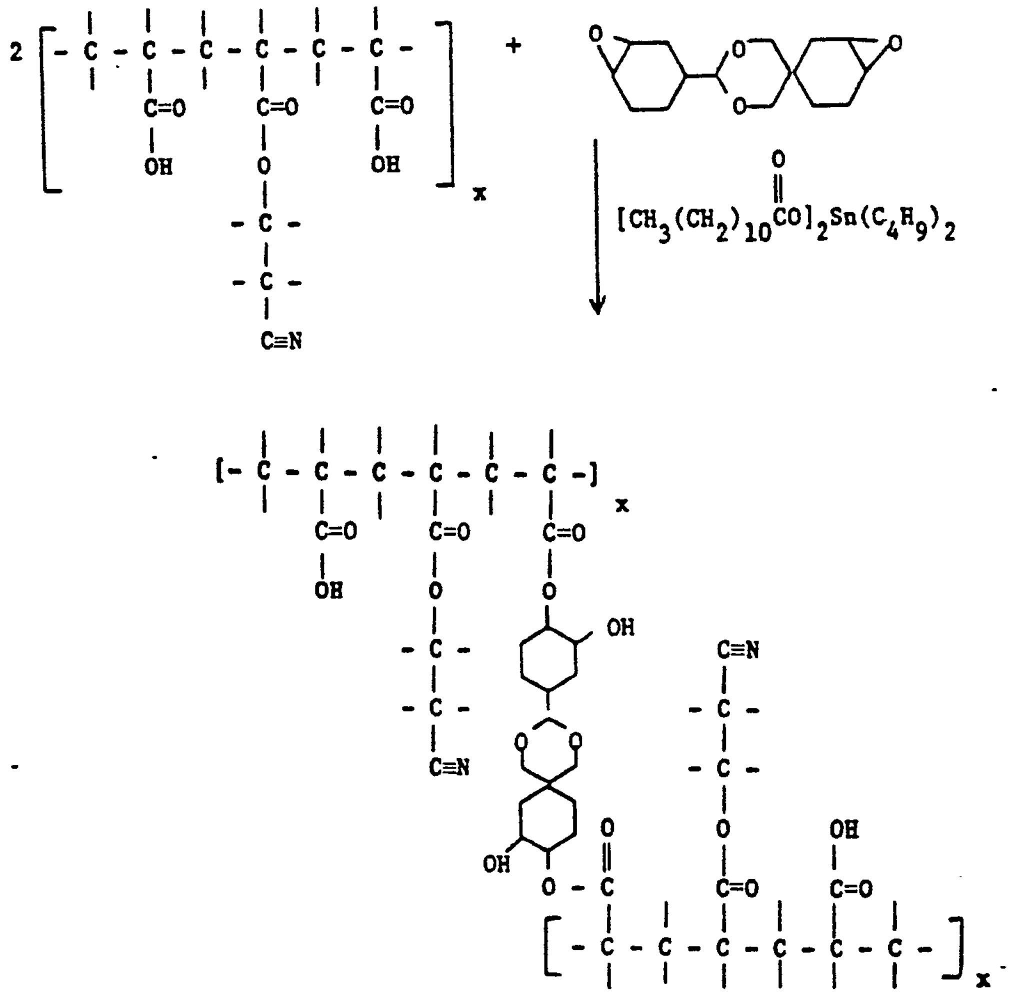


While various uses of the low molecular weight cyanoethylacrylate/acrylic acid copolymers and terpolymers of the present invention are contemplated, a particularly preferred embodiment of the present invention involves employing the polymer in solution as a primer to bond metal containing thin films or coatings to organic polymer substrates, particularly conductive metal oxide films to acrylic substrates for use in aircraft transparencies. For optimum adhesion, the polarity of the polymer is preferably such that the contact angle of water on the polymer is between 31 and 47°. For application, the reaction mixture is preferably further diluted with a compatible solvent and applied to a substrate surface. Heat is applied to evaporate the solvent, polymerize, and optionally crosslink, the reactants in situ.

Thus, a method for bonding a metal-containing coating to an orangic polymer substrate surface comprises the steps of

a. applying to the surface of the substrate to be coated a primer solution of a copolymer comprising cyanoethylacrylate and acrylic acid;

b. heating the substrate surface to evaporate the solvent; and

c. depositing a metal-containing coating on the primed substrate surface.

In a preferred embodiment of this method the coating is indium oxide, the substrate is acrylic, the solvent is cyclohexanone, the solution further comprises a crosslinking agent, heating is sufficient to evaporate the solvent and crosslink the polymer, and the coating is deposited in a vacuum chamber.

Another aspect of the present invention pertains to an article of manufacture which comprises:

a. an organic polymer substrate;

b. disposed on a surface of said substrate a primer layer comprising a copolymer of cyanoethylacrylate and acrylic acid; and

c. deposited on said primer layer a metal-containing film.

Preferably, the substrate is acrylic and the film comprises indium oxide.

The present invention will be further understood from the descriptions of specific examples which follow.

Example I

A cyanoethylacrylate/acrylic acid copolymer is prepared by mixing cyanoethylacrylate and acrylic acid in a molar ratio of 0.5 at a total solids concentration of 25 percent in cyclohexanone. The reaction solution also contains 0.04 percent 2,2′-azobis(isobutyronitrile) which acts as a free radical chain reaction initiator. As the reaction solution is heated, the 2,2′-azobis(isobutyronitrile) decomposes, with the evolution of nitrogen, forming two free radicals which initiate the polymerization of the cyanoethylacrylate and acrylic acid. The reaction solution is held at a temperature of 90 to 100°C for 24 hours to form an oligomer of cyanoethylacrylate and acrylic acid comprising the following structure

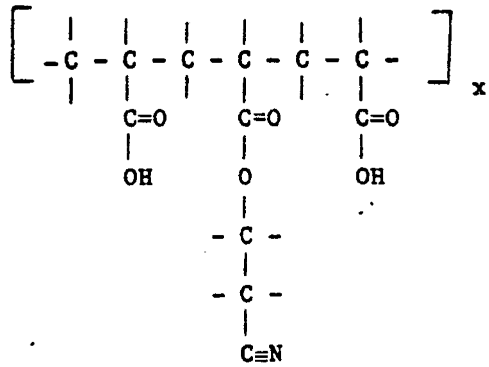

wherein x is such that the molecular weight is sufficiently low so that the oligomer remains soluble in cyclohexanone.

Example II

The cyanoethylacrylate/acrylic acid oligomer of Example I is preferably crosslinked as follows. Dibutlytin dilaurate catalyst is dissolved at a concentration of 0.5 percent by weight of the oligomer in a solvent comprising 50 percent by volume each of cyclohexanone and acetone. The oligomer is then dissolved in the catalyst solution, to a final concentration of 10 percent solids, and the crosslinking agent is added, 2-(3,4-epoxycyclohexyl-5,5-spiro-3,4-expoxy) cyclohexane-metadioxane available from Union Carbide as ERL—4234 cycloaliphatic epoxide.

Example III

For use as a primer to bond a conductive metal oxide film to an organic polymer substrate, a surfactant is added to the reaction solution of Example II. In this example, the surfactant is FC—430 from 3M Corporation added at a concentration of 0.03 percent of the total solution weight. The solution, containing 0.5 percent by weight of oligomer of dibutyltin dilaurate catalyst, is flow coated onto a surface of an acrylic substrate and curved at 200°F (about 94°C). The reaction of the crosslinking agent with acid groups in the polymer in a 1:2 ratio can be monitored by infrared analysis, which shows the disappearance of about 67 percent of the epoxide groups in 1 hours; 82 percent in 2 hours, and no further decrease after 2 hours.

EXAMPLE IV

A terpolymer is formed by the reaction of cyanoethylacrylate, hydroxyethylacrylate and acrylic acid in cyclohexanone (25 percent solids) using 0.04 percent azobis(isobutyronitrile) initiator as in Example I. The reaction is carried out at 130°C for 30 minutes. The oligomer solution is then diluted to 1.25 percent solids with a 50/50 by volume cyclohexanone/acetone solvent. The primer solution, containing a triisocyanate crosslinking agent available as DES—N—75 from Mobay Chemical, is applied to a polymethylmethacrylate substrate surface. The solvent is evaporated and the oligomer crosslinked by heating to 200°F (about 94°C) for 30 minutes. Finally, the primed acrylic surface is coated with indium oxide by vacuum coating at 195°F (about 90.5°C).

For purposes of comparison, a vacuum deposited indium oxide film exhibits zero adhesion to an unprimed acrylic surface, a peel strength of 1.75 kN/m (10 pounds per linear inch (pli)) with a commercially available phenolic primer, 1.75 kN/m (10 pli) with a cyanoethylacrylate/acrylic acid copolymer having a molar ratio of 2:1, 3.5 to 5.25 kN/m (20 to 30 pli) with a cyanoethylacrylate/acrylic acid copolymer having a molar ratio of 1:2, and 20.2 to 2.8 g kN/m (115 to 165 pli) with the crosslinked cyanoethylacrylate/acrylic acid copolymer of Example III.

The above examples are offered to illustrate the present invention. Various modifications such as different concentrations of reactants, other solvents, and varying reaction conditions are contemplated for producing a variety of copolymers. The ratio of acrylic acid and functional acrylate monomers may vary over a wide range; the structural formulae herein therefore represent a random segment rather than an exactly repeating unit of copolymers. When such copolymers are used as primers, substrates other than acrylic and coatings other than indium oxide are included within the scope of the present invention as defined by the following claims.

**Claims**

1. A composition comprising the polymerization reaction product of cyanoethylacrylate and acrylic acid comprising the structural formula

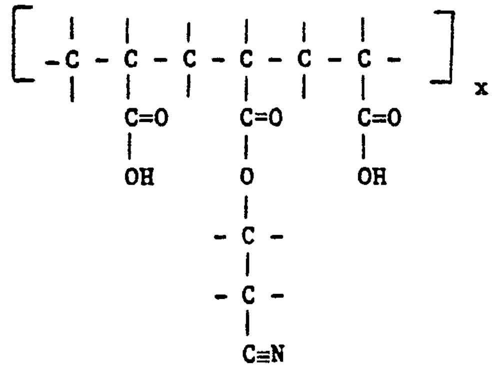

wherein x is ⩾1.

2. The composition according to claim 1, wherein the molecular weight of the polymer is sufficiently low so that the polymer is soluble in cyclohexanone.

3. The composition according to claim 1, wherein the linear polymer is further reacted with a crosslinking agent to form a crosslinked polymer comprising the structural formula

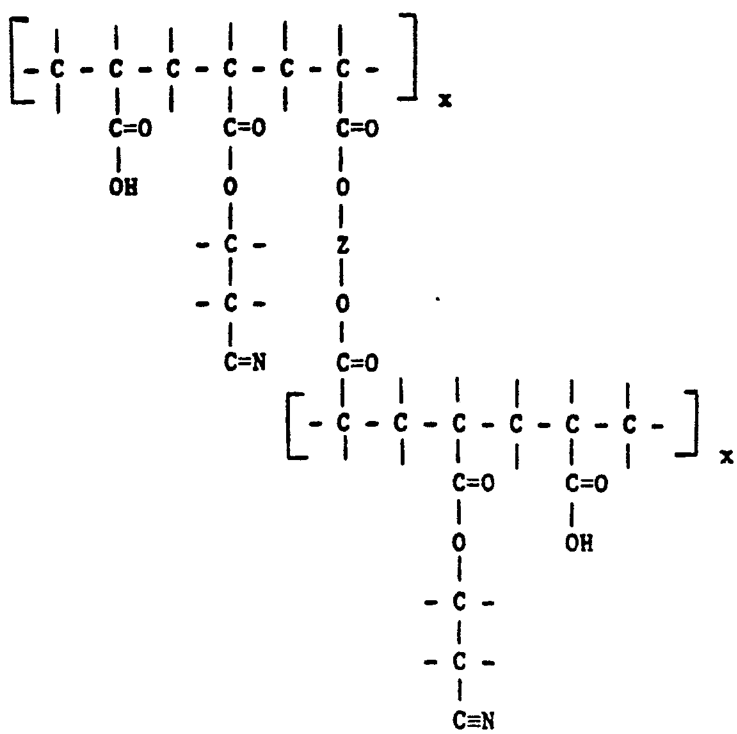

wherein Z represents the crosslinking agent.

4. The composition according to claim 3, wherein the crosslinking agent is selected from the group consisting of epoxides and triisocyanates.

5. The composition according to claim 4, wherein the crosslinking agent is 2-(3,4-epoxycyclohexyl-5,5-spiro-3,4-epoxy) cyclohexanemeta-dioxane.

6. The composition comprising the polymerization reaction product of cyanoethylacrylate, hydroxyethylacrylate and acrylic acid comprising the structural formula

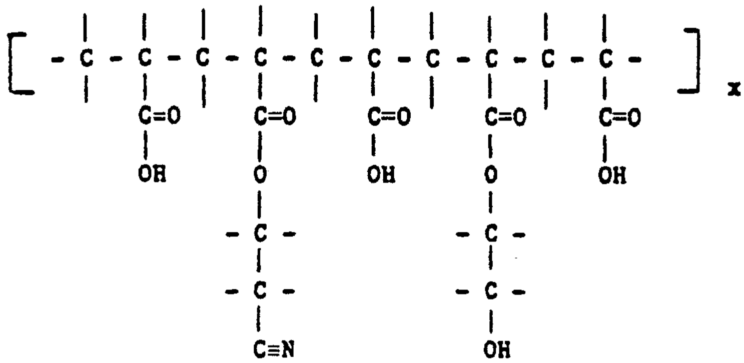

wherein x is ⩾1.

7. The composition according to claim 6, wherein the polymer is further reacted with a crosslinking agent.

8. The composition according to claim 7, wherein the crosslinking agent is selected from the group consisting of triisocyanates and epoxides.

9. The composition according to claim 8, wherein the crosslinking agent is 2-(3,4-epoxycyclohexyl-5,5-spiro-3,4-epoxy) cyclohexanemeta-dioxane.

10. A method for synthesizing a copolymer of acrylic acid and functional acrylate comprising the steps of:

a. dissolving in a compatible solvent acrylic acid, cyanoethylacrylate and hydroxyethylacrylate monomers;

b. adding a free radical initiator;

c. heating the solution to a sufficient temperature for a sufficient time to a polymerize the monomers.

11. The method according to claim 10, wherein the free radical initiator is azobis(isobutyronitrile).

12. The method according to claim 11, wherein the solvent comprises cyclohexanone.

13. The method according to claim 12, wherein the solution is heated to a temperature in the range of 90 to 100°C for about 24 hours.

14. A primer for bonding metal-containing coatings to organic polymer substrates comprising a low molecular weight cyanoethylacrylate/acrylic acid copolymer in solution.

15. The primer according to claim 14, wherein the solvent comprises cyclohexanone.

16. The primer according to claim 15, wherein the concentration of the copolymer is about 1 to 10 percent.

17. The primer according to claim 14, wherein the copolymer is crosslinked.

18. The primer according to claim 14, wherein the copolymer is a terpolymer of cyanoethylacrylate, hydroxyethylacrylate and acrylic acid.

19. A method for bonding a metal-containing coating to an organic polymer substrate surface comprising the steps of:

a. applying to the surface of the substrate to be coated a primer solution of a copolymer comprising cyanoethylacrylate and acrylic acid;

b. heating the substrate surface to evaporate the solvent; and

c. depositing a metal-containing coating on the primed substrate surface.

20. The method according to claim 19, wherein the coating is indium oxide, the substate is acrylic, the solvent is cyclohexanone, the solution further comprises a crosslinking agent, heating is sufficient to evaporate the solvent and crosslink the polymer, and the coating is deposited in a vacuum chamber.

21. An article of manufacture which comprises:

a. an organic polymer substrate;

b. disposed on a surface of said substrate a primer layer comprising a copolymer of cyanoethylacrylate and acrylic acid; and

c. deposited on said primer layer a metal-containing film.

22. An article according to claim 21, wherein the substrate is acrylic and the film comprises indium oxide.

**Patentansprüche**

1. Zusammensetzung enthaltend das Reaktionsprodukt der Polymerisation von Cyanethylacrylat und Acrylsäure mit der Strukturformel

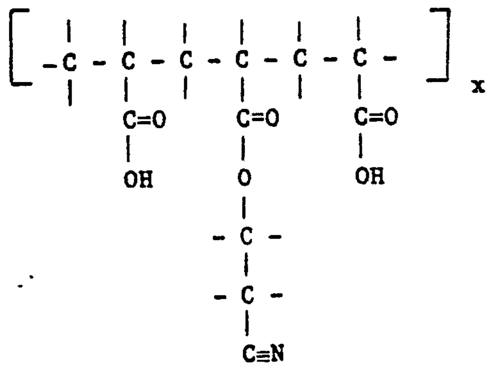

in der x ⩾ 1 ist.

2. Zusammensetzung nach Anspruch 1, dadurch gekennzeichnet, daß das Molekulargewicht des Polymeren ausreichend niedrig ist, so daß das Polymere in Cyclohexanon löslich ist.

3. Zusammensetzung nach Anspruch 1, dadurch gekennzeichnet, daß das lineare Polymer weiterhin mit einem Vernetzungsmittel umgesetzt wird, um eine vernetztes Polymer zu bilden, das die Strukturformel

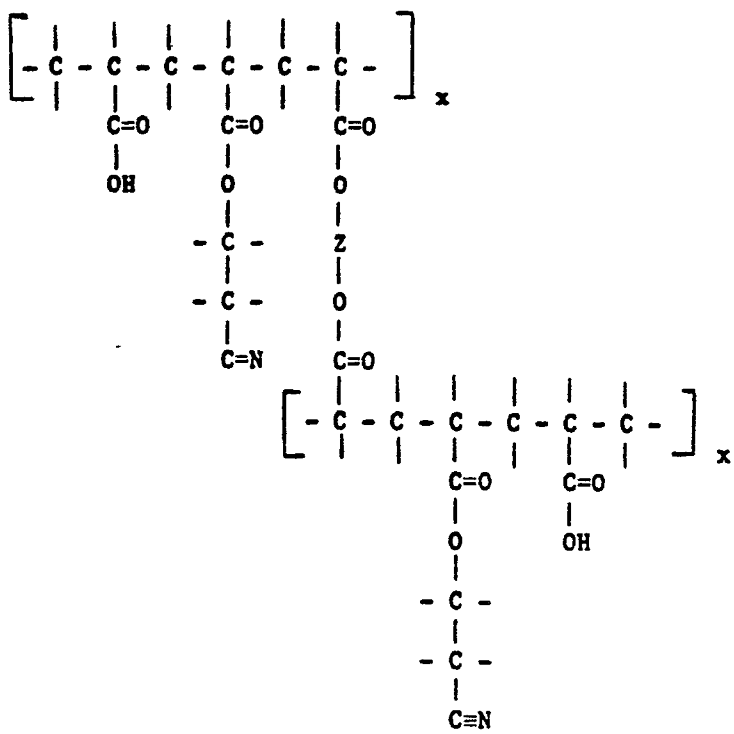

aufweist, in der Z das Vernetzungsmittel ist.

4. Zusammensetzung nach Anspruch 3, dadurch gekennzeichnet, daß das Vernetzungsmittel ausgewählt ist aus der Gruppe aus Epoxiden und Triisocyanaten.

5. Zusammensetzung nach Anspruch 4, dadurch gekennzeichnet, daß das Vernetzungsmittel 2-(3,4-Epoxycyclohexyl-5,5-spiro-3,4-epoxy)cyclohexan-meta-dioxan ist.

6. Zusammensetzung enthaltend das Reaktionsprodukt der Polymerisation von Cyanethylacrylat, Hydroxyethylacrylat und Acrylsäure mit der Strukturformel

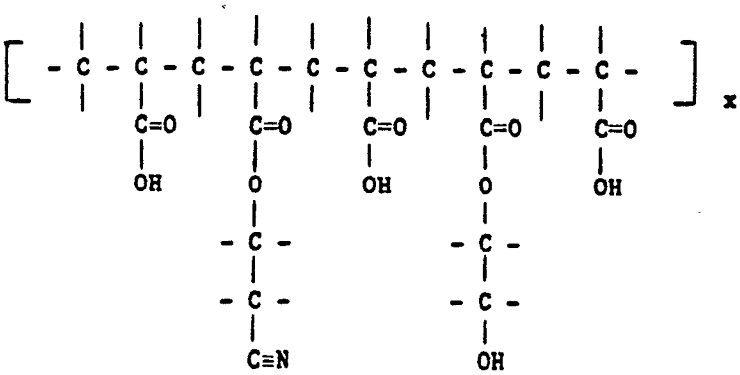

in der x ≥ 1 ist.

7. Zusammensetzung nach Anspruch 6, dadurch gekennzeichnet, daß das Polymer weiterhin mit einem Vernetzungsmittel umgesetzt ist.

8. Zusammensetzung nach Anspruch 7, dadurch gekennzeichnet, daß das Vernetzungsmittel ausgewählt ist aus der Gruppe von Triisocyanaten und Epoxiden.

9. Zusammensetzung nach Anspruch 8, dadurch gekennzeichnet, daß das Vernetzungsmittel 2-(3,4-Epoxycyclohexyl-5,5-spiro-3,4-epoxy)cyclohexan-meta-dioxan ist.

10. Verfahren zum Synthetisieren eines Copolymeren von Acrylsäure und funktionellem Acrylát mit den Schritten:

a. Auflosen von Acrylsaure, Cyanethylacrylat und Hydroxyethylacrylatomonomeren in einem verträglichen Lösungsmittel,

b. Zugeben eines freie Radikale entwickelnden Starters,

c. Wärmen der Lösung auf eine ausreichende Temperatur und für eine ausreichende Zeit, um die Monomeren zu polymerisieren.

11. Verfahren nach Anspruch 10, dadurch gekennzeichnet, daß der freie Radikale entwickelnde Starter Azobis(isobutyrnitril) ist.

12. Verfahren nach Anspruch 11, dadurch gekennzeichnet, daß das Lösungsmittel Cyclohexanon enthält.

13. Verfahren nach Anspruch 12, dadurch gekennzeichnet, daß die Lösung etwa 24 Stunden auf eine Temperatur im Bereich von 90 bis 100°C erwärmt wird.

14. Primer zum Binden metallenthaltender Beschichtungen auf organischen Polymersubstraten, enthaltend ein gelöstes Cyanoethylacrylat/Acrylsäurecopolymer mit niedrigem Molekulargewicht.

15. Primer nach Anspruch 14, dadurch gekennzeichnet, daß das Lösungsmittel Cyclohexanon enthält.

16. Primer nach Anspruch 15, dadurch gekennzeichnet, daß die Konzentration des Copolymeren etwas 1 bis 10% beträgt.

17. Primer nach Anspruch 14, dadurch gekennzeichnet, daß das Copolymer vernetzt ist.

18. Primer nach Anspruch 14, dadurch gekennzeichnet, daß das Copolymer eine Terpolymer von Cyanethylacrylat, Hydroxyethylacrylat und Acrylsäure ist.

19. Verfahren zum Binden einer metallenthaltenden Beschichtung auf der Oberfläche eines organischen Polymersubstrates mit den Schritten:

a. Aufbringen einer Primerlösung eines Copolymeren, das Cyanoethylacrylate und Acrylsäure enthält, auf die Oberflääche des zu beschichtenden Substrates.

b. Erwärmen der Substratoberfläche, um das Lösungsmittel zu verdampfen, und

c. Ablagern einer metallenthaltenden Beschichtung auf der vorbeschichteten Oberfläche des Substrates.

20. Verfahren nach Anspruch 19, dadurch gekennzeichnet, daß die Beschichtung Indiumoxid ist, das Substrat Acrylat, das Lösungsmittel Cyclohexanon ist und die Lösung weiterhin ein Vernetzungsmittel enthält, das Heizen ausreichend ist, um das Lösungsmittel zu verdampfen und das Polymer zu vernetzen, und die Beschichtung in einer Vakuumkammer aufgebracht wird.

21. Gegenstand enthaltend:

a. ein organisches Polymersubstrat,

b. eine auf der Oberfläche des Substrates abgelagerte Primerschicht, enthaltend ein Copolymer von Cyanethylacrylat und Acrylsäure, und

c. einen auf der Vorbeschichtung abgelagerten metallenthaltenden Film.

22. Gegenstand nach Anspruch 21, dadurch gekennzeichnet, daß das Substrat Acrylat ist und der Film Indiumoxid enthält.

**Revendications**

1. Composition comprenant le produit de la réaction de polymérisation de l'acrylate de cyanoéthyle et de l'acide acrylique présentant la formula développée

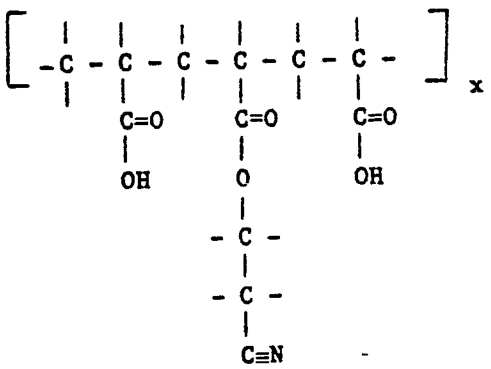

dans laquelle x est ⩾1.

2. Composition selon la revendication 1, dans laquelle le poids moléculaire du polymère est suffisamment bas pour qu'il soit soluble dans la cyclohexanone.

3. Composition selon la revendication 1, dans laquelle le polymère linéaire est en outre mis en réaction avec un agent réticulant pour former un polymère réticulé présentant la formule développée.

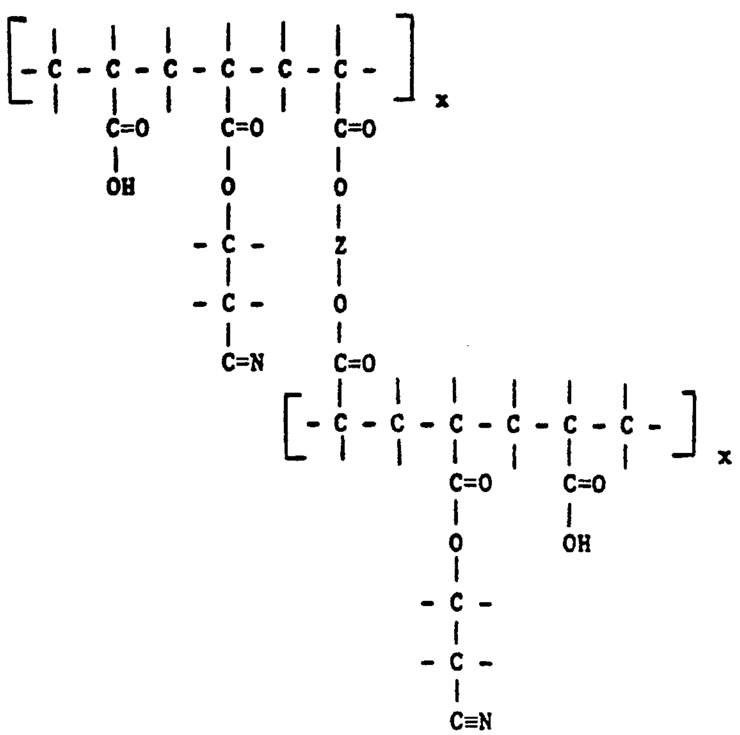

dans laquelle Z représente l'agent réticulant.

4. Composition selon la revendication 3, dans laquelle l'agent réticulant est choisi dans le groupe constitué par des époxydes et des tri-isocyanates.

5. Composition selon la revendication 4, dans laquelle l'agent réticulant est le 2-(3,4-époxycyclohexyl-5,5-spiro-3,4-époxy)-cyclohexane-métadioxanne.

6. Composition comprenant le produit de la réaction de polymérisation de l'acrylate de cyanoéthyle, de l'acrylate d'hydroxyéthyle et de l'acide acrylique présentant la formule développée.

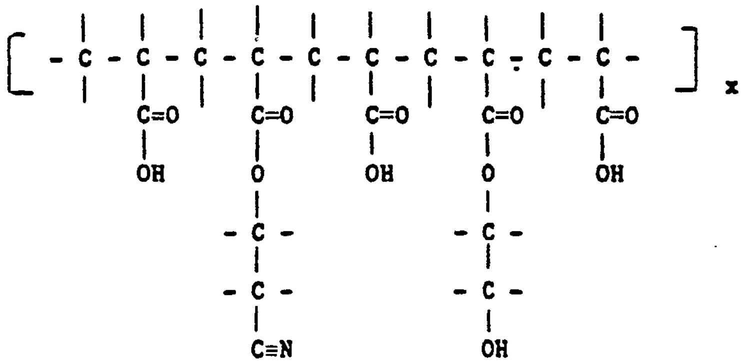

dans laquelle x est ≥1.

7. Composition selon la revendication 6, dans laquelle le polymère est en outre mis en réaction avec un agent réticulant.

8. Composition selon la revendication 7, dans laquelle l'agent réticulant est choisi dans le groupe constitué par des tri-isocyanates et des époxydes.

9. Composition selon la revendication 8, dans laquelle l'agent réticulant est le 2-(3,4-époxycyclohexyl-5,5-spiro-3,4-époxy)-cyclohexane-métadioxanne.

10. Procédé de synthèse d'un copolymère de l'acide acrylique et d'un acrylate fonctionnel, comprenant les opérations successives consistant à:

a) dissoudre dans un solvant compatible les monomères acide acrylique, acrylate de caynoéthyle et acrylate d'hydroxyéthyle;

b) ajouter un initiateur à radicaux libres;

c) chauffer la solution à une température suffisante et pendant une durée suffisante pour polymériser les monomères.

11. Procédé selon la revendication 10, dans lequel l'initiateur à radicaux libres est l'azo-bis-(isobutyronitrile).

12. Procédé selon la revendication 11, dans lequel le solvant comprend de la cyclohexanone.

13. Procédé selon la revendication 12, dans lequel la solution est chauffée à une température dans la gamme de 90 à 100°C pendant 24 h environ.

14. Couche de fond pour fixer des couches de revêtement contenant un métal sur des substrats en polymère organique, comprenant un copolymère acrylate de caynoéthyle/acid acrylique de faible poids moléculaire en solution.

15. Couche de fond selon la revendication 14, dans laquelle le solvant comprend de la cyclohexanone.

16. Couche de fond selon la revendication 15, dans laquelle la concentration du copolymère est d'environ 1 à 10%.

17. Couche de fond selon la revendication 14, dans laquelle le copolymère est réticulé.

18. Couche de fond selon la revendication 14, dans laquelle le copolymère est un terpolymère d'acrylate de cyanoéthyle, d'acrylate d'hydroxyéthyle et d'acide acrylique.

19. Procédé de fixation d'une couche de revêtement contenant un métal sur la surface d'un substrat en polymère organique, comprenant les opérations successives consistant à:

a) appliquer sur la surface du substrat à revêtir une couch de fond constituée par une solution d'un copolymère comprenant de l'acrylate de cyanoéthyle et de l'acide acrylique;

b) chauffer la surface du substrat pour évaporer le solvant; et

c) déposer un couche de revêtement contenant un métal sur la surface du substat recouverte de la couche de fond.

20. Procédé selon la revendication 19, dans lequel la couche de revêtement est en oxyde d'indium, le substrat est acrylique, le solvant est la cyclohexanone, la solution comprend en outre un agent réticulant, le chauffage est suffisant pour évaporer le solvant et réticuler le polymère et la couche de revêtement est déposée dans une chambre à vide.

21. Article manufacturé qui comprend:

a) un substrate en polymère organique;

b) appliquée sur une surface de ce substrat, un couche de fond comprenant un copolymère d'acrylate de cyanoéthyle et d'acide acrylique; et

c) déposé sur cette couche de fond, un film contenant un métal.

22. Article selon la revendication 21, dans lequel le substrat est acrylique et le film comprend de l'oxyde d'indium.